Europäisches Patentamt

European Patent Office

Office européen des brevets

(19)

(11) **EP 0 636 251 B1**

(12) **EUROPÄISCHE PATENTSCHRIFT**

(45) Veröffentlichungstag und Bekanntmachung des Hinweises auf die Patenterteilung:
**24.02.1999 Patentblatt 1999/08**

(21) Anmeldenummer: **94901931.9**

(22) Anmeldetag: **01.12.1993**

(51) Int Cl.⁶: **G01S 13/34**, G01S 13/42, G01S 13/91

(86) Internationale Anmeldenummer:
**PCT/EP93/03366**

(87) Internationale Veröffentlichungsnummer:
**WO 94/15226 (07.07.1994 Gazette 1994/15)**

(54) **VERFAHREN ZUR ÜBERWACHUNG EINES GEBIETES UND ANORDNUNG ZUR DURCHFÜHRUNG DES VERFAHRENS**

METHOD OF MONITORING AN AREA, AND A DEVICE FOR CARRYING OUT THE METHOD

PROCEDE PERMETTANT DE SURVEILLER UN TERRAIN ET AGENCEMENT PERMETTANT LA MISE EN UVRE DUDIT PROCEDE

(84) Benannte Vertragsstaaten:
**DE FR GB IT NL SE**

(30) Priorität: **23.12.1992 DE 4243669**

(43) Veröffentlichungstag der Anmeldung:
**01.02.1995 Patentblatt 1995/05**

(73) Patentinhaber: **Daimler-Benz Aerospace Aktiengesellschaft**
**81663 München (DE)**

(72) Erfinder:
- **GRÜNER, Wilhelm**
  **D-89075 Ulm (DE)**
- **LIEM, Tiang-Gwan**
  **D-89075 Ulm (DE)**

(74) Vertreter: **Fröhling, Werner Otto, Dr. et al**
**Daimler-Benz Aerospace AG**
**Patentabteilung**
**Sedanstrasse 10**
**89077 Ulm (DE)**

(56) Entgegenhaltungen:
**EP-A- 0 322 005**

- **IEEE MTT-S INTERNATIONAL MICROWAVE DIGEST SYMPOSIUM Bd. III , 10. Juni 1991 , BOSTON, USA Seiten 1147 - 1150 XP260339 BUI ET AL. '94 GHz FMCW Radar for Low Visibility Aircraft Landing System'**
- **NTZ ARCHIV Bd. 11, Nr. 4 , Juli 1989 , BERLIN DE Seiten 165 - 174 XP54462 HOLPP 'Radar- und Radiometer Sensoren im Millimeterwellen-Bereich'**

**Beschreibung**

Die Erfindung betrifft ein Verfahren zur Überwachung eines Gebietes mit Hilfe eines frequenzmodulierten Dauerstrich-Radars nach dem Oberbegriff des Patentanspruchs 1.

Die Erfindung ist insbesondere für Luftfahrzeuge, z.B. Flugzeuge, als Bordradar geeignet, damit diese auch bei ungünstigen Sichtbedingungen ("low visibility aircraft landing"), z.B. Nebel, sicher landen können. Außerdem ist bei ungünstigen Sichtbedingungen während des Rollvorganges eine Überwachung des vor einem Luftfahrzeug liegenden Rollweges (Taxiway) möglich.

Ein solches Bordradar benötigt eine geringe Reichweite, z.B. kleiner 5 km, sowie eine relativ gute Auflösungen, z.B. 1 m bis 3 m, in Entfernungs- bzw. 0,1° bis 0,5° in Azimutrichtung. Für solche Anwendungen ist die Verwendung eines sogenannten Pulsradars bekannt. Dieses hat unter anderem folgende Nachteile:

- der kleine sogenannte Dutycycle (Tastverhältnis), der durch das geforderte hohe Verhältnis von Reichweite zu Entfernungsauflösung bedingt ist, erfordert den Einsatz eines Röhrensenders, z.B. eines Magnetrons. Dieser hat an sich bekannte Nachteile, z.B. eine geringe Lebensdauer sowie einen hohen Wartungsaufwand (wegen der zu erzeugenden Hochspannung);

- die erforderliche hohe (Sende-)Spitzenleistung in Verbindung mit einem hohen (Sende-)Antennengewinn kann zu gesundheitlichen Schäden, insbesondere an den Augen, führen. Ein solches Pulsradar ist daher ungeeignet, insbesondere für die Überwachung der Rollwege und/oder des Vorfeldes eines Flughafens;

- die Verwendung eines Pulsradars in einer sogenannten High-PRF oder Impulskompressions-Betriebsweise ist in nachteiliger Weise sehr kostenaufwendig und daher unwirtschaftlich;

- werden in einem Luftfahrzeug mehrere Pulsradare benötigt, so treten zwischen diesen in nachteiliger Weise Störungen auf. Diese sind lediglich durch einen kostenungünstigen Aufwand bezüglich der sogenannten EMV (Elektro-magnetische Verträglichkeit) vermeidbar.

Aus der EP-A-0 322 005 ist frequenzmoduliertes Dauerstrich-Radar (FM-CW-Radar) bekannt, das zur Anwendung als Bordradar in einem Flugzeug geeignet ist. Dabei wird mittels einer Sendeantenne, bei welcher die Hauptrichtung des bleistiftförmigen Richtdiagrammes von der Sendefrequenz abhängig ist, eine azimutale Abtastung der Erdoberfläche durchgeführt, so daß eine Kartierung möglich ist.

Aus der Druckschrift IEEE MTT-S International Microwave Digest Symposium, Band III, 10.6.91, Boston, USA, Seiten 1147-1150, Bui et al., "94 GHz FMCW Radar for Low Visibility Aircraft Landing System" ist ein FMCW Bordradar zur azimutalen Abtastung der Landebahn bekannt. Damit ist es einem Piloten möglich, mit dem Flugzeug unabhängig von den Einrichtungen eines Flughafens zu manövrieren.

Der Erfindung liegt daher die Aufgabe zugrunde, ein gattungsgemäßes Verfahren anzugeben, mit welchem in kostengünstiger und zuverlässiger Weise eine Überwachung von auf dem Erdboden befindlichen Verkehrswegen, insbesondere Landebahnen und/oder Rollwegen, möglich wird.

Diese Aufgabe wird gelöst durch die in dem kennzeichnenden Teil des Patentanspruchs 1 angegebenen Merkmale. Vorteilhafte Ausgestaltungen und/oder Weiterbildungen sind den weiteren Ansprüchen entnehmbar.

Ein erster Vorteil der Erfindung besteht darin, daß ein frequenzmoduliertes Dauerstrich-Radar, das im folgenden auch als FM-CW-Radar bezeichnet wird, verwendet wird. Ein solches FM-CW-Radar benötigt zur Erzeugung der Sendeleistung lediglich eine geringe Spannung, z.B. 12 Volt, so daß kostengünstige und zuverlässige elektronische Bauelemente, z.B. Halbleiterschaltungen, verwendbar sind.

Ein zweiter Vorteil besteht darin, daß sowohl für die Sendeantenne als auch Empfangsantenne, die auch aus mehreren Einzelantennen bestehen können, frequenzgesteuerte Antennen verwendet werden. Bei diesen ist die Hauptrichtung der Richtdiagramme von der Frequenz des Sende- bzw. Empfangssignales abhängig, so daß vorteilhafterweise eine mechanische Schwenkung und/oder ein im allgemeinen aufwendiges Phasenstell-Netzwerk zur Strahl schwenkung nicht benötigt wird.

Ein dritter Vorteil besteht darin, daß eine sehr schnelle Umschaltung auf unterschiedliche Betriebsweisen, z.B. unterschiedliche Reichweiten und/oder unterschiedliche azimutale Abtastbereiche, ermöglicht wird.

Weitere Vorteile ergeben sich aus der nachfolgenden Beschreibung.

Die Erfindung wird im folgenden anhand von Ausführungsbeispielen unter Bezugnahme auf schematisch dargestellte Figuren näher erläutert.

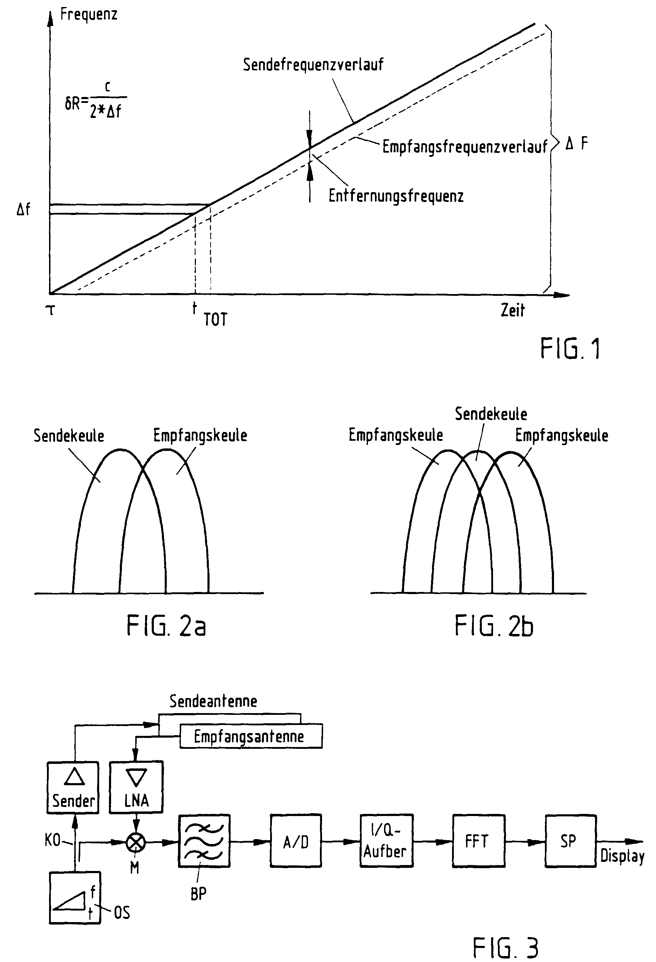

Die Figuren 1 bis 7 zeigen schematisch dargestellte Diagramme sowie Blockbilder zur Erläuterung der Erfindung.

Die nachfolgend beschriebenen Beispiele beziehen sich auf ein Bordradar, also eine transportable Radaranlage, die besonders vorteilhaft als Lande- und/oder Rollhilfe in einem Luftfahrzeug einsetzbar ist. Ein solches als FM-CW-Radar ausgelegtes Bordradar ist z. B. in der Flugzeugnase angeordnet, wobei die Sende- und Empfangsantennen mechanisch so mit dem Flugzeug verbunden sind, daß die Änderungen der Flugzeugebene ausgeglichen werden können. Der azimutale Schwenkbereich der Hauptrichtungen der zugehörigen Richtdiagramme liegt im wesentlichen in der Flugzeug-Ebene, welche durch die Längsachse des Flugzeugs und die durch die Tragflächen gehende Achse (Nickachse) bestimmt ist. Es ist zweckmäßig, den Schwenkbereich bezüglich der Flugzeug-Ebene so zu neigen, daß insbesondere während des Landeanfluges eine Überwachung des Erdbodens und/oder der Landebahn ermöglicht wird.

Ein solches FM-CW-Radar arbeitet z.B. im 35 GHz-Bereich, z.B. in einem Frequenzbereich von 32 GHz bis 37 GHz. Von der Sendeantenne wird eine maximale Ausgangsleistung von ungefähr 0,5 W ausgesandt. Die frequenzgesteuerte Sendeantenne, die z.B. eine Länge (in der Flugzeug-Ebene, senkrecht zur Längsachse) von ungefähr 1,2 m sowie eine Höhe (senkrecht dazu) von ungefähr 0,15 m besitzt, hat z.B. einen Antennengewinn von ungefähr 42 dB und eine von den Betriebsbedingungen abhängige Polarisation, z.B. senkrecht und/oder parallel zur Flugzeug-Ebene oder eine zirkulare Polarisation. Die Keulenbreite in Elevationsrichtung beträgt ungefähr 4°. Mit einem solchen FM-CW-Radar ist, bezogen auf die Längsachse des Flugzeugs, ein Bereich von ungefähr ± 15° azimutal abtastbar. Dieser Bereich ist im Azimut mit einer Abtastrate (Scanrate) von ungefähr 30 Hz bei einer azimutalen Winkelauflösung von kleiner 0,3° abtastbar. Dabei ist in Entfernungsrichtung eine Auflösung von ungefähr 3 m vorhanden bei einer Reichweite von ungefähr 6 km. Derartige Werte sind mit einer mechanisch geschwenkten Antenne allenfalls mit einem wirtschaftlich nicht vertretbarem Aufwand erreichbar.

Bei der frequenzgesteuerten Sendeantenne ist daher, bezogen auf die Längsrichtung des Flugzeugs, innerhalb des genannten azimutalen Bereiches von ± 15° jeder azimutalen Richtung eine Sendefrequenz zugeordnet. Für die elektronisch gesteuerte azimutale Schwenkung der Hauptrichtung des Sende-Richtdiagramm innerhalb dieses Bereiches wird daher ein frequenzmoduliertes Sendesignal benötigt. Es wird vorzugsweise eine lineare Modulation verwendet, z.B. linear steigend oder linear abnehmend, in dem genannten Frequenzbereich von 32 GHz bis 37 GHz, welcher dem einen Gesamtwinkel von 30° umfassenden azimutalen (Gesamtschwenk-)Bereich entspricht. Für die Entfernungsauflösung $\delta R = c/(2 \cdot \Delta f)$, wobei c die Lichtgeschwindigkeit bedeutet, ist ein Frequenzhub $\Delta f$ erforderlich, welcher von der gewünschten Entfernungsauflösung abhängt. Z.B. entspricht einer Entfernungsauflösung $\delta R = 1,5$ m ein Frequenzhub $\Delta f = 100$ MHz. Die Modulationsperiode, sowie die dieser entsprechende hohärente Integrationszeit $t_{TOT}$, ist von der gewünschten Zielbeleuchtungszeit (Time on Target) abhängig. Es wird beispielsweise $t_{TOT} = 275$ µs gewählt. Der Integrationszeit $t_{TOT}$ entspricht also im Schwenkbereich ein azimutales Inkrement, welches durch die azimutale Winkelauflösung bestimmt wird. Es ist vorteilhaft, innerhalb des Bereiches alle Inkremente gleich groß zu wählen. Für eine zeitlich fortlaufende (Radar-)Übersicht über das zu überwachende geographische Gebiet, z.B. Landebahn oder Taxiway, ist es weiterhin vorteilhaft, den azimutalen (Gesamtwinkel-)Bereich mit einer konstanten azimutalen Winkelgeschwindigkeit abzutasten. Dieser entspricht eine sich linear ändernde, z.B. linear steigende, Sendefrequenz über den gesamten Bereich. FIG. 1 zeigt einen solchen zeitabhängigen Sendefrequenzverlauf. Dabei entspricht die (Gesamt-)Frequenzdiffenz $\Delta F$ dem azimutalen (Gesamtwinkel-)Bereich von z.B. 30°. Diese Frequenzdifferenz $\Delta F$ wird in einer Zeit, z.B. ungefähr 33 ms, durchlaufen, welche der (Abtast-)Wiederholrate (hier z.B. 30 Hz) entspricht. Der azimutale (Gesamtwinkel-)Bereich wird also in azimutal benachbarte (Winkel-)Inkremente aufgeteilt. Zu jedem Inkrement gehört im Zeitbereich ein ganz bestimmtes Zeitintervall mit der Integrationszeit $t_{TOT}$ (zeitliche Länge).

Die azimutale Abtastung des Bereiches und die nachfolgend noch näher erläuterte kohärente Auswertung in den azimutalen (Winkel-)Inkrementen ist in verschiedener Weise möglich. Beispielsweise kann immer eine Abtastung in einer azimutalen Richtung erfolgen. In diesem Fall ist der Sendefrequenzverlauf, über mehrere Abtastperioden betrachtet, sägezahnförmig (steigende Rampe z.B. für eine Abtastung immer von links; fallende Rampe z.B. für eine Abtastung immer von rechts). Es ist jedoch auch eine zeitlich angrenzende Abtastung in beiden Richtungen möglich. In diesem Fall ist der Sendefrequenzverlauf, über mehrere Abtastperioden betrachtet, dreieckförmig.

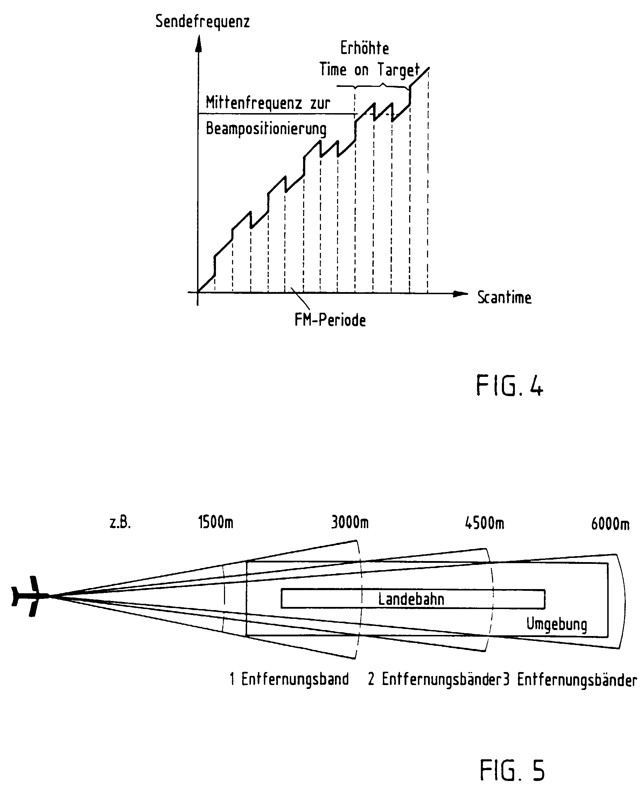

Es ist jedoch vorteilhafterweise auch eine davon abweichende Abtastung möglich. Beispielsweise kann ein azimutales Inkrement, in dem ein Ziel erkannt ist, zeitlich nacheinander mehrfach abgetastet werden, z.B. dreimal. In diesem Fall erhöht sich die Zielbeleuchtungszeit (Time on Target), so daß das Ziel z.B. genau klassifiziert werden kann. Bei einer solchen Abtastung entsteht z.B. ein treppenförmiger Sendefrequenzverlauf entsprechend FIG. 4 über den abzutastenden Bereich.

An einem Ziel reflektierte Anteile des Sendesignals werden vorzugsweise von einer mechanisch von der Sendeantenne unabhängigen Empfangsantenne empfangen. Diese ist z.B. identisch wie die vorstehend beschriebene Sendeantenne aufgebaut. Diese mechanisch unabhängigen Antennen ermöglichen die bei einem FM-CW-Radar erforderliche elektrische Entkopplung von z.B. mindestens 40 dB zwischen dem Sende- und dem Empfangssignal. Es ist vorteilhaft, die Sendeantenne und die Empfangsantenne in Azimutrichtung um einen geringen Winkelbetrag, z.B 0,3°, gegeneinander verdreht anzuordnen. Es entstehen sogenannte schielende Antennen. Damit wird gemäß FIG. 2a erreicht, daß trotz jeweils breiter Antennenkeulen (Richtdiagramme) von z.B. 0,4° eine wesentlich geringere Winkelauflösung von z.B. 0,25° erreicht wird. Bei einer solchen Antennenanordnung entstehen tolerierbare Signalverluste, die jedoch gegebenenfalls durch Verwendung einer Empfangsantenne, die aus mehreren Einzel-empfangsantennen besteht, zu mindern sind.

FIG. 2b zeigt die der FIG. 2a entsprechenden Verhältnisse für eine Sendeantenne und zwei Einzel-Empfangsantennen. Für derartige (Sende- und/oder Empfangs-)Antennen können z.B. Schlitzantennen mit gerader Hohlleitereinspeisung verwendet werden.

In FIG. 1 ist der zu dem dort dargestellten Sendefrequenzverlauf gehörende Empfangsfrequenzverlauf für derartige Empfangsantennen dargestellt. Zwischen Sende- und Empfangsfrequenzverlauf entsteht ein Frequenzversatz, der auch Entfernungsfrequenz genannt wird. Der zugehörige zeitliche Versatz ist mit τ bezeichnet.

FIG. 3 zeigt ein beispielhaftes Blockbild eines solchen FM-CW-Radars. Dabei wird in einem Oszillator OS z.B. ein dem Sendefrequenzverlauf entsprechend FIG. 1 entsprechendes frequenzmoduliertes Signal erzeugt. Dieses gelangt über einen Koppler KO an einen Sendeverstärker (Sender), wird dort verstärkt und anschließend von der Sendeantenne ausgesandt. Die reflektierten Signalanteile werden von der Empfangsantenne empfangen, in einem rauscharmen Verstärker LNA (Low Noise Amplifier) verstärkt und anschließend mit Hilfe eines Homodyne-Empfängers ausgewertet. Dazu wird das verstärkte Empfangssignal zunächst in einem Mischer M mit dem über den Koppler Ko ausgekoppelten Sendesignal in das sogenannte Basisband gemischt und über einen Bandpaß BP (zur Unterdrükkung sendernaher Frequenzen und zur Vermeidung des sogenannten Aliasing) einem Analog-/Digital-Wandler A/D zugeführt. An dessen Eingang liegt also ein analoges Videosignal an.

Die A/D-Wandlerrate hängt von der geforderten Reichweite, Entfernungsauflösung und der Zielbeleuchtungszeit ab. Die maximal auftretende Frequenz $f_{max}$ ergibt sich aus der Formel

$$f_{max} = \frac{R_{max}}{\delta R \cdot t_{TOT}}$$

So ist z.B. bei einer maximalen Reichweite $R_{max} = 6$ km, einer Entfernungsauflösung von $\delta R = 3$ m und einer $t_{TOT} = 275$ μs die maximale Frequenz $f_{max} = 7,3$ MHz. Die Samplingrate für die A/D-Wandlung kann dann zu $f_s \geq 2f_{max}$ gewählt werden.

Nach dem A/D-Wandler folgt für die Rangeauflösung eine FFT (Fast Fourier Transformation). Bei einer Auflösung von 3 m und einer Reichweite von 6 km ergeben sich ca. 2000 Rangegates, gewählt werden dann 2048 ($2^{11}$). Da die Eingangswerte real sind, muß, um eine 2048 Punkte-FFT durchzuführen, vorher eine I/Q-Aufbereitung vorgenommen werden (Shift um $f_s/4$).

Nach der FFT werden im Signalprozessor (SP) die Beträge der Rangebins gebildet und eine Entfernungs- ($R^{-4}$) und eine an sich bekannte Geschwindigkeitskorrektur (Verkopplung von Entfernung und Geschwindigkeit beim FM-CW-Radar) durchgeführt.

Das nach dem Signalprozessor (SP) entstandene Signal wird z.B. mit Hilfe eines daran angeschlossenen Displays (Anzeigeschirm) ausgewertet.

Das beschriebene Verfahren hat durch die Anwendung des FM-CW-Prinzips und der frequenzgesteuerten Abtastung (Frequency-Scanning) insbesondere für ein Bordradar folgende Vorteile:

- Durch die Verwendung einer einzigen Frequenzrampe als Sendesignal und die fehlende mechanische Antennensteuerung wird die zugehörige Steuerelektronik wesentlich vereinfacht.

- Die elektrischen Verluste bei einer kontinuierlichen Strahlschwenkung sind geringer als bei einer schrittweisen Schwenkung.

- Durch die elektronische Strahlschwenkung wird die hohe Wiederholrate (Updaterate) von bis zu 30 Hz trotz der geforderten Reichweite und des breiten Scanwinkels von +/- 15° erreicht.

- Die (Sende-)Spitzenleistung ist niedrig (CW-Signal), so daß im Vergleich zu einem Pulsradar die Personengefährdung beim Taxiway-Betrieb vernachlässigbar ist.

- Das Frequency-Scanning-Prinzip bewirkt allenfalls eine vernachlässigbare gegenseitige Störung durch Interferenz mehrerer 35 GHz-Radare auf dem selben Flugplatz.

- Die technische Zuverlässigkeit (MTBF) ist vor allem durch die konsequente Verwendung von Halbleitern und die fehlende mechanische Scanbewegung sehr hoch. Die Wartung und Logistik ist deshalb auch sehr einfach und kostengünstig.

- Das Konzept ist modular und kann daher kostengünstig in ein bestehendes Wetterradarsystem integriert werden. Bei Verwendung von unterschiedlichen Plattformen kann die 35-GHz-Plattform mit geringem Aufwand stabilisiert werden.

- Bei der Integration des FM-CW-Radars mit dem Wetterradar (Pulsgerät) ist die gegenseitige Beeinflussung minimal und daher nicht störend.

- Das System ist vollkohärent, so daß Funktionserweiterungen im Signalverarbeitungs-Bereich, z.B. Dopplerverarbeitung für Wettersituationsanalysen, möglich sind.

- Reichweitenerhöhung zum Zwecke einer Schlechtwettererkennung können durch längere Integrationszeiten und Zusammenfassung kostengünstig erzielt werden. Auch eine Erhöhung der Sendeleistung ist unproblematisch.

Durch den beschriebenen Frequenzhub Δf entsteht in einem azimutalen Inkrement an sich eine Verschiebung der Hauptrichtung des Richtdiagrammes. Dadurch entsteht eine an sich verringerte laterale Auflösung. Dieser Nachteil ist für tatsächliche Anwendungen dadurch vermeidbar, daß eine entsprechend höhere mittlere Sendefrequenz gewählt wird, z.B. das 45 GHz-Band statt des beschriebenen 35 GHz-Bandes.

Anhand der FIG. 4 wurde bereits erwähnt, daß in vorteilhafter Weise auch ein schrittweises elektronisches Strahlschwenken möglich ist. Mit einem solchen Verfahren sind z.B. die Abtastbedingungen in hochflexibler Weise an sich ändernde Umgebungsparameter anpaßbar. Beispielsweise kann gemäß FIG. 5 während des Landeanfluges eines Flugzeuges auf unterschiedliche Entferungsbänder, welche unterschiedlichen (Sende-)Frquenzbändern entsprechen, umgeschaltet werden, so daß ein Flugzeugführer immer eine an den Flug; zustand angepaßte optimale elektronische Sicht hat. Mit einer solchen Frequenzumschaltung gemäß FIG. 4 sind auch ansonsten nicht erkennbare störende Witterungseinflüsse, z.B. störende Abwinde (Microbursts) im Bereich der Landebahn und/oder Luftturbulenzen bei ansonsten wolkenarmen Himmel und guter Sicht, erkenn- und darstellbar, so daß ein Flugzeugführer rechtzeitig entsprechende Gegenmaßnahmen, z.B. ein sogenanntes Durchstarten, einleiten kann.

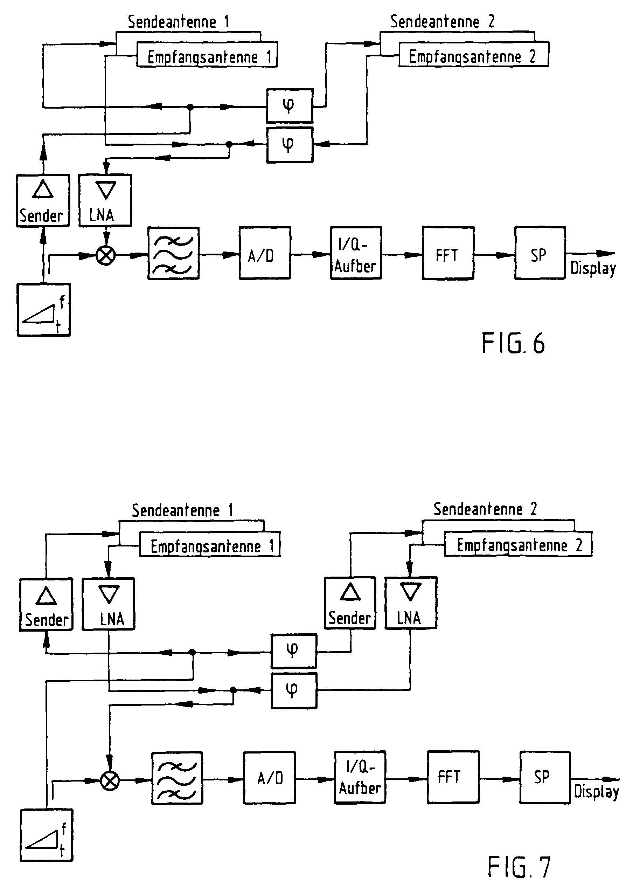

Eine innerhalb eines azimutalen Inkrements vorhandene störende Verschiebung der Hauptrichtungen der Richtdiagramme ist vermeidbar, wenn innerhalb des Inkrementes während der durch Frequenzänderung bedingten Strahlschwenkung eine zusätzliche Phasenänderung, z.B. mit Hilfe einer sogenannten Phased-Array-Antennenanordnung, vorgenommen wird. Bei einer solchen Anordnung werden z.B. gemäß FIG. 6 statt der in FIG. 3 dargestellten einen Sendeantenne und einen Empfangsantenne mehrere Sendeantennen (zwei Stück in FIG. 6) und mehrere Empfangsantennen (zwei Stück in FIG. 6) verwendet. Mit Hilfe der zwischen den Sende- und Empfangsantennen angeordneten Phasenstellglieder φ sind die für den zusätzlichen Phased-Array-Betrieb erforderlichen Phasenbeziehungen, die an sich bekannt sind, einstellbar. Es ist zweckmäßig, diese Phasenstellglieder φ gemäß FIG. 7 vor den zu den Sendeantennen gehörenden Sendeverstärkern (Sender) bzw. nach den zu den Empfangsantennen gehörenden Empfangsverstärkern LNA anzuordnen.

Weiterhin ist es möglich, die Phasenschieber (Phasenstellglieder) in Abhängigkeit von der Frequenz des Oszillators einzustellen.

Die bereits erwähnte bidirektionale Abtastung mit Hilfe einer dreieckförmigen Modulation hat auch den Vorteil, daß die Dopplerverschiebung aufgrund der Eigengeschwindigkeit bestimmt werden kann.

Die Erfindung ist nicht auf die beschriebenen Ausführungsbeispiele beschränkt, sondern sinngemäß auf weitere anwendbar. Beispielsweise kann für die Sende- und/oder Empfangsantenne eine sogenannte Planar-Array-Antenne (Resonanz-Flatplate-Antenne) oder eine Parabolreflektor-Antenne, z.B. in Cassegrain-Ausführung verwendet werden. Bei derartigen Antennen ist eine mechanische Strahlschwenkung zweckmäßig.

Weiterhin ist es möglich, eine einzige Antenne als Sende- und/oder Empfangsantenne zu verwenden.

Das beschriebene Verfahren ist nicht auf die Anwendung für Luftfahrzeuge beschränkt, sondern auch für andere Verkehrsmittel, z.B. Schiffe, als Bordradar geeignet, z.B. zur genauen Navigation und/oder Erkennung von Hindernissen im Hafenbereich und/oder innerhalb eines Flusses und/oder Kanales.

## Patentansprüche

1.  Verfahren zur Überwachung eines Gebietes mit Hilfe eines frequenzmodulierten Dauerstrich-Radars, wobei

    -  von einer Sendeantenne, bei welcher die azimutale Hauptrichtung des Richtdiagramms von der Frequenz des Sendesignals abhängt, ein frequenzmoduliertes Dauerstrich-Sendesignal ausgesandt wird,

    -  ein von dem zu überwachenden Gebiet reflektierter Anteil des Sendesignals von einer Empfangsantenne, bei welcher die azimutale Hauptrichtung des Richtdiagramms von der Frequenz des Empfangssignals abhängt, empfangen wird,

    -  eine kohärente Signalverarbeitung zur Auswertung des Empfangssignals erfolgt,

    -  bezogen auf eine vorgebbare Richtung, ein azimutaler Bereich,

        der in eine vorgebbare Anzahl aneinander angrenzender azimutaler Inkremente aufgeteilt wird und
        in dem eine azimutale Schwenkung des Richtdiagramms der Sendeantenne durch eine Frequenzänderung des Sendesignals erfolgt, gewählt wird und

    -  in jedem Inkrement eine monotone Änderung der Frequenz des Sendesignals erfolgt, <u>dadurch gekennzeichnet,</u>

    -  daß in einem Inkrement eine Phasenänderung der Sende- und/oder Empfangssignale mittels einer Phased-Array-Antennenanordnung vorgenommen wird, so daß die durch die Frequenzmodulation des Sendesignals bewirkte Richtungsänderung des Richtdiagrammes der Sendeantenne ausgeglichen wird.

2. Verfahren nach Anspruch 1, dadurch gekennzeichnet, daß alle Inkremente eine vorgebbare gleiche zeitliche Länge besitzen.

3. Verfahren nach Anspruch 1 oder Anspruch 2, dadurch gekennzeichnet, daß die Frequenz des Sendesignals sowie die zeitliche Länge der Inkremente in Abhängigkeit von der Reichtweite sowie der radialen und/oder azimutalen Auflösung des Radars gewählt werden.

4. Verfahren nach einem der vorhergehenden Ansprüche, dadurch gekennzeichnet, daß zumindest die Sendeantenne sowie die Empfangsantenne als Bestandteile eines Bordradars für ein Luftfahrzeug ausgebildet werden.

5. Verfahren nach einem der vorhergehenden Ansprüche zur Verwendung in einem Flugzeug als Landehilfe sowie zur Rollbahnüberwachung, wobei als vorgebbare Richtung der Sende-und/oder Empfangsantennen die Bewegungsrichtung des Flugzeugs gewählt wird und der azimutale Bereich im wesentlichen symmetrisch bezüglich der vorgebbaren Richtung angeordnet wird.

6. Verfahren nach einem der vorhergehenden Ansprüche, dadurch gekennzeichnet, daß die Inkremente so angeordnet werden, daß eine zeitlich überlappende kohärente Signalauswertung über die Inkremente hinweg erfolgt.

## Claims

1. Method of monitoring an area with the assistance of a frequency-modulated continuous signal radar, wherein

   - a frequency-modulated continuous wave transmission signal is transmitted by a transmission antenna, in which the azimuthal primary direction of the directive pattern depends on the frequency of the transmitted signal,

   - a part of the transmitted signal, which is reflected by the area to be monitored, is received by a receiving antenna in which the azimuthal primary direction of the directive pattern depends on the frequency of the received signal,

   - a coherent signal processing is carried out for evaluation of the received signal,

   - an azimuthal region, which is divided into a presettable number of mutually adjoining azimuthal increments and in which an azimuthal swivelling of the directive pattern of the transmission antenna is effected by a change in frequency of the transmitted signal, is selected with respect to a presettable direction and

   - a monotone change in the frequency of the transmitted signal is selected in each increment, characterised thereby

   - that a change in phase of the transmitted and/or received signals is undertaken in an increment by means of a phased array antenna arrangement so as to compensate for the directional change, which is caused by the frequency modulation of the transmitted signal, in the directive pattern.

2. Method according to claim 1, characterised thereby that all increments have a presettable equal duration in time.

3. Method according to claim 1 or claim 2, characterised thereby that the frequency of the transmitted signal as well as the length of the increments in terms of time are selected in dependence on the range as well as the radial and/or azimuthal resolution of the radar.

4. Method according to one of the preceding claims, characterised thereby that at least the transmission antenna as well as the receiving antenna are constructed as components of an on-board radar for an aircraft.

5. Method according to one of the preceding claims for use in an aircraft as a landing aid as well as taxiway monitoring, wherein the direction of movement of the aircraft is selected as presettable direction of the transmission and/or receiving antennae and the azimuthal region is arranged substantially symmetrically with respect to the presettable direction.

6. Method according to one of the preceding claims, characterised thereby that the increments are so arranged that a coherent signal evaluation, which overlaps in time, is carried out over the increments.

## Revendications

1. Procédé de surveillance d'un terrain à l'aide d'un radar à ondes entretenues modulées en fréquence, dans le cas duquel:

   - un signal d'émission à ondes entretenues modulées en fréquence est émis par une antenne d'émission dans le cas de laquelle la direction principale azimutale du diagramme de directivité dépend de la fréquence du signal d'émission .

- une partie du signal d'émission réfléchie par le terrain à surveiller est reçue par une antenne de réception dans le cas de laquelle la direction principale azimutale du diagramme de directivité dépend de la fréquence du signal de réception.

- un traitement cohérent du signal est exécuté pour exploiter le signal de réception.

- par rapport à une direction que l'on peut prescrire, on choisit une zone azimutale,

> qui se divise en un nombre, que l'on peut prescrire, d'incréments azimutaux qui se jouxtent l'un l'autre et,
> dans laquelle se fait un balayage azimutal du diagramme de directivité de l'antenne d'émission au moyen d'une modification de fréquence du signal d'émission, et

- à chaque incrément se fait une modification monotone de la fréquence du signal d'émission, caractérisé par le fait,

> que dans un incrément on procède à une modification de phase des signaux d'émission et/ou des signaux de réception au moyen d'un dispositif d'antenne à balayage électronique de façon que la modification de direction du diagramme de directivité de l'antenne d'émission provoquée par la modulation de fréquence du signal d'émission soit compensée.

2. Procédé selon la revendication 1, caractérisé par le fait que tous les incréments possèdent une longueur temporelle identique, que l'on peut prescrire.

3. Procédé selon la revendication 1 ou la revendication 2, caractérisé par le fait que la fréquence du signal d'émission ainsi que la longueur temporelle des incréments sont choisies en fonction de la portée ainsi que de la résolution radiale et/ou azimutale.

4. Procédé selon l'une des revendications précédentes, caractérisé par le fait qu'au moins l'antenne d'émission ainsi que l'antenne de réception sont formées en tant que constituants d'un radar de bord pour un avion.

5. Procédé selon l'une des revendications précédentes pour l'emploi dans un avion comme auxiliaire d'atterrissage ainsi que pour la surveillance de la voie de roulage, dans le cas duquel, comme direction à prescrire des antennes d'émission et/ou de réception, c'est la direction du mouvement de l'avion qui est choisie et la zone azimutale est disposée sensiblement symétriquement par rapport à la direction à prescrire.

6. Procédé selon l'une des revendications précédentes, caractérisé par le fait que les incréments sont disposés de façon que, le long des incréments, il se fasse une exploitation cohérente du signal avec recouvrement dans le temps.

Frequenz

$$\delta R = \frac{c}{2*\Delta f}$$

Sendefrequenzverlauf

Empfangsfrequenzverlauf

$\Delta F$

Entfernungsfrequenz

$\Delta f$

$\tau$      $t_{TOT}$      Zeit

## FIG. 1

Sendekeule    Empfangskeule

## FIG. 2a

Empfangskeule   Sendekeule   Empfangskeule

## FIG. 2b

Sendeantenne

Empfangsantenne

Sender    LNA

KO

M    BP    A/D    I/Q-Aufber    FFT    SP    Display

OS

## FIG. 3

Sendefrequenz

Erhöhte
Time on Target

Mittenfrequenz zur
Beampositionierung

Scantime

FM-Periode

## FIG. 4

z.B.        1500m        3000m        4500m        6000m

Landebahn

Umgebung

1 Entfernungsband    2 Entfernungsbänder 3 Entfernungsbänder

## FIG. 5

FIG. 6

FIG. 7